# EUROPEAN PATENT APPLICATION

(11) **EP 4 730 130 A1**
(43) Date of publication of application: **22.04.2026**
(21) Application number: 24830320.8
(22) Date of filing: 24.05.2024
(51) Int. Cl.: G06F 9/54

(54) **DATA PROCESSING METHOD, DATA PROCESSING APPARATUS, DATA PROCESSING SYSTEM, AND READABLE MEDIUM**

(30) Priority: 27.06.2023 CN 202310769533
(71) Applicant: Sanechips Technology Co., Ltd., Shenzhen, Guangdong 518055 (CN)
(72) Inventor: LAN, Kejia, Shenzhen, Guangdong 518055 (CN); SHI, Guangming, Shenzhen, Guangdong 518055 (CN); WANG, Hao, Shenzhen, Guangdong 518055 (CN)
(74) Representative: Canzler & Bergmeier Patentanwälte Partnerschaft mbB
(86) International application number: PCT/CN2024/095183
(87) International publication number: WO 2025/001672

(57) **Abstract**

Provided in the present disclosure is a data processing method applied to a data processing apparatus in a data processing system. The method comprises: when a data exchange request message sent by a first cache unit is received, acquiring address information carried in the data exchange request, and determining first target data corresponding to address information in a memory; sending a notification message to the first cache unit; receiving second target data and third data which are sent by the first cache unit, wherein the third data is data that is to be subjected to data exchange with the first target data, and the second target data is data that a second cache unit has requested to read; and when the second target data is not equal to the first target data, returning, to the first cache unit, a data exchange response message that carries the third data.

## Description

### CROSS REFERENCE TO RELATED APPLICATIONS

The present disclosure claims the priority to Chinese Patent Application No. 202310769533.5 filed with the CNIPA on June 27, 2023, the contents of which are incorporated herein by reference in their entirety.

### TECHNICAL FIELD

The present disclosure relates to the field of computer processing technology, and in particular, to a data processing method, a data processing apparatus, a data processing system, and a readable medium.

### BACKGROUND

A symmetric multiprocessing (SMP) system refers to a system in which a plurality of central processing units (CPUs) operate symmetrically in a server, and the CPUs are not in a primary-secondary relationship or a subordinate relationship. The CPUs share a same physical memory, and time required for each CPU to access any address in the memory is the same, so that the SMP system is also called a uniform memory access (UMA) structure.

### SUMMARY

The present disclosure provides a data processing method, a data processing apparatus, a data processing system, and a readable medium.

In a first aspect, an embodiment of the present disclosure provides a data processing method applicable to a data processing apparatus in a data processing system, including: receiving a data exchange request message sent by a first cache unit, acquiring address information carried in the data exchange request message, and determining first target data corresponding to the address information in a memory; sending a notification message to the first cache unit; receiving second target data and third data sent by the first cache unit, wherein the third data is data to be exchanged with the first target data, and the second target data is data that has been requested to read by a second cache unit; and returning a data exchange response message carrying the third data to the first cache unit, in a case where the second target data is not equal to the first target data.

In another aspect, an embodiment of the present disclosure further provides a data processing apparatus, including: one or more processors and a storage device having one or more programs stored thereon; and the one or more programs when executed by the one or more processors cause the one or more processors to implement the above data processing method.

In another aspect, an embodiment of the present disclosure further provides a data processing system, including at least one processing chip, which includes the above data processing apparatus.

In another aspect, an embodiment of the present disclosure further provides a computer-readable medium having a computer program stored thereon, wherein the above data processing method is implemented when the program is executed.

### BRIEF DESCRIPTION OF DRAWINGS

FIG. 1 is a schematic diagram of a data processing flow in the related technology;
FIG. 2 is a first schematic diagram of a data processing flow according to an embodiment of the present disclosure;
FIG. 3 is a second schematic diagram of a data processing flow according to an embodiment of the present disclosure;
FIG. 4 is a schematic diagram illustrating a processing flow of ATCCOMPARE (AtomicCompare) failure according to an embodiment of the present disclosure;
FIG. 5 is a schematic diagram illustrating a processing flow of ATCCOMPARE success according to an embodiment of the present disclosure;
FIG. 6 is a first schematic structural diagram of a data processing system (i.e., an SMP system) according to an embodiment of the present disclosure;
FIG. 7 is a second schematic structural diagram of a data processing system according to an embodiment of the present disclosure; and
FIG. 8 is a third schematic structural diagram of a data processing system (i.e., a Cache-Coherent Non-Uniform Memory Access (CC-NUMA) system) according to an embodiment of the present disclosure.

### DETAIL DESCRIPTION OF EMBODIMENTS

Exemplary embodiments of the present disclosure will be described more fully below with reference to the accompany drawings, but the exemplary embodiments described herein may be embodied in different forms and should not be interpreted as being limited to the embodiments described herein. Rather, the embodiments are provided to make the present disclosure thorough and complete, and are intended to enable those having skills in the art to fully understand the scope of the present disclosure.

The term "and/or" used herein includes any and all combinations of one or more associated listed items.

Terms used herein are merely used to describe specific embodiments, and are not intended to limit the present disclosure. As used herein, singular forms such as "a", "an" and "the" is intended to include a plural form, unless expressly stated in the context. It should be further understood that terms such as "include" "comprise" and/or "be made of" used herein indicate presence of the described features, entireties, steps, operations, elements and/or components, but do not exclude presence or addition of one or more other features, entireties, steps, operations, elements, components and/or combinations thereof.

The embodiments of the present disclosure may be described with reference to a plan view and/or a cross-sectional view by means of idealized schematic diagrams of the present disclosure. Accordingly, exemplary illustrations may be modified according to manufacturing techniques and/or tolerances. The embodiments are not limited to those illustrated in the accompany drawings, but include modifications to configurations formed based on manufacturing processes. Thus, regions shown in the accompany drawings are illustrative, and shapes of the regions shown in the accompany drawings illustrate specific shapes of regions of elements, but are not intended to make limitations.

Unless otherwise defined, all terms (including technical and scientific terms) used herein have the same meaning as commonly understood by those of ordinary skill in the art. It should be further understood that terms, such as those defined in commonly used dictionaries, should be interpreted as having meanings that are consistent with meanings thereof in context of the related technology and the background of the present disclosure, and should not be interpreted in an idealized or overly formal sense unless expressly so defined herein.

Data processing method and system according to the embodiments of the present disclosure are applicable to any data processing system involving an atomic operation, such as an SMP system, a CC-NUMA system and the like. In the following embodiments, the SMP system is taken as an example for explanation, but the embodiments of the present disclosure are not limited thereto.

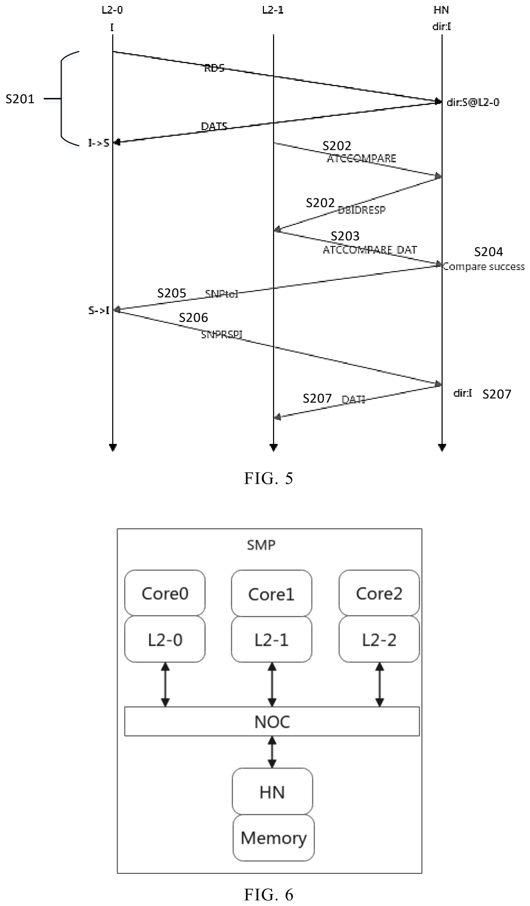

FIG. 6 is a first schematic structural diagram of a data processing system (i.e., the SMP system) according to an embodiment of the present disclosure. As shown in FIG. 6, the SMP system includes: a processing core (Core), a level-2 cache (L2), a network-on-chip (NOC), a host node (HN), and a memory (Memory), the L2 and the HN are both connected to the NOC, and the HN is connected to the memory. The L2 may include one or more cache units, each of which may be connected to one or more processing cores. In the SMP system shown in FIG. 6, the L2 includes 3 cache units L2-0, L2-1, and L2-2, the L2-0 is connected to a processing core Core0, the L2-1 is connected to a processing core Core1, and the L2-2 is connected to a processing core Core2. In the SMP system, the HN interacts with each cache unit of the L2 to realize cache coherency, and the HN manages a space of the entire memory by taking a cache line as a unit, and tracks a situation of accessing the memory of each cache unit in the L2.

MESI represents four states of data in a cache line, and a purpose of managing cache data is achieved by switching among the four states. The states represented by MESI and descriptions thereof are shown in Table 1:

**Table 1**

| state | note |
|---|---|
| M (Modify, a modified state) | the cache line is valid, the data is modified and is inconsistent with data in the memory, and the data is merely stored in the present cache unit |
| E (Exclusive, an exclusive state) | the cache line is valid, the data is consistent with the data in the memory, and the data is merely stored in the present cache unit |
| S (Shared, a shared state) | the cache line is valid, the data is consistent with the data in the memory, and the data may be stored in the present cache unit and another cache unit at the same time |
| I (Invalid, an invalid state) | the cache line data is invalid |

The HN may track situations of being accessed of data of all cache lines by maintaining a directory table (dir table), and a data structure of the directory table (dir table) is shown in Table 2:

**Table 2**

| state (State) | Bit width (VEC) |
|---|---|
| state[1:0] | vec[n-1:0] |

In the Table 2, each entry corresponds to data of one cache line, and a location of the data of the cache line data may be determined based on address information. An entry includes a state field (State) and a bit width field (VEC), the state field records a state of data read by a cache unit, and the bit width field corresponds to the number n of the cache units in the L2, each bit corresponds to one cache unit in the L2 to indicate which cache unit in the L2 stores the data.

The state field in the Table 2 merely records three states, i.e., the E state, the S state, and the I state. After a cache unit in the L2 obtains data in the E-state, the cache unit does not notify the HN of an action of modifying the data, such that the HN is not aware of whether a state of the data stored in the cache unit in the L2 is in the E state or the M state. For example, dir.state=E and VEC='b001 indicate that data of the present cache line in the L2-0 may be in the M state, the E-state, the S state (downgrading from the E-state to the S state is not notified to the HN), or the I state (replacement of the data from the cache unit is not notified to the HN); dir.state=S and VEC='b011 indicate that the data of the present cache line in the L2-0 and the L2-1 may be in the S state or the I state (replacement of the data from the cache units is not notified to the HN); and dir.state=I indicates that none of the cache units in the L2 stores the data of the present cache line.

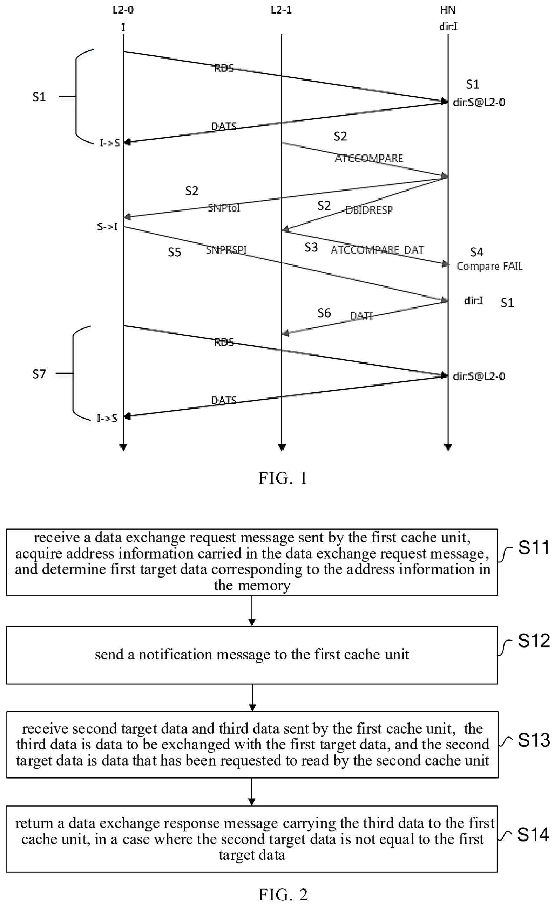

FIG. 1 is a schematic diagram of a data processing flow in the related technology, i.e., an atomic lock operation process of an AtomicCompare in the SMP system. As shown in FIG. 1, the process includes operations S1 to S7.

At operation S1, the L2-0 sends a shared state data read request (RDS) message to the HN for requesting reading of data, and after receiving the RDS message, the HN returns a shared data read response (DATS) message, and records the requested data as being in the S state. After receiving the DATS message, the L2-0 stores the requested data and modifies a state of the data from the I state into the S state, initially, a state of data in each cache unit is in the I state.

At operation S2, the L2-1 sends an atomic compare (ATCCOMPARE) message carrying address information to the HN for implementing an atomic compare operation, and the HN queries the memory to obtain data corresponding to the address information. On one hand, the HN returns a data buffer identification response (DBIDRESP) message to the L2-1, on the other hand, the HN sends a snoop to invalid (SNPtoI) message to the L2-0 to snoop the L2-0.

At operation S3, after receiving the DBIDRESP message, the L2-1 sends atomic compare data (ATCCOMPARE_DAT) to the HN, the ATCCOMPARE_DAT includes exchange data and compare data.

At operation S4, after receiving the ATCCOMPARE_DAT, the HN compares the data corresponding to the address information with the compare data, and confirms that comparison fails (i.e., Compare FAIL).

At operation S5, after receiving the SNPtoI message, the L2-0 invalidates the data corresponding to the address information, and returns a snoop response invalid (SNPRSPI) message to the HN.

At operation S6, after receiving the SNPRSPI message, the HN records the data corresponding to the address information as being in the I state, and returns an invalid state data response (DATI) message to the L2-1.

If the processing core Core0 corresponding to the L2-0 still needs to use the data corresponding to the address information, the L2-0 needs to send the RDS message to the HN again for reading the data, that is, operation 7 needs to be performed.

At operation S7, the L2-0 sends the RDS message to the HN for requesting reading of the data, and after receiving the RDS message, the HN returns the DATS message, and records the requested data as being in the S state. After receiving the DATS message, the L2-0 stores the requested data and modifies the state of the data from the I state into the S state.

It should be noted that, at the operation 4, if the comparison between the compare data in the ATCCOMPARE_DAT and the data corresponding to the address information succeeds, the HN modifies the data corresponding to the address information into the exchange data in the ATCCOMPARE_DAT in the memory, and continues to perform the subsequent operations. If the processing core Core0 corresponding to the L2-0 still needs to access the data corresponding to the address information, since the data corresponding to the address information in the memory has been modified into the exchange data at this time, the L2-0 needs to send the RDS message to the HN again to acquire the modified data (i.e., the exchange data), that is, the operation S7 needs to be performed.

A defect of the technical solution in the related technology lies in that in a case where data comparison fails, the data corresponding to the address information in the memory is not modified actually, that is, no data exchange operation is performed, but the data in the L2-0 is still invalidated, such that if the processing core Core0 still needs to access the data later, the RDS message needs to be sent again for reading the data, which reduces processing performance of the processing core.

In order to solve the above technical problem, the embodiments of the present disclosure provides a data processing method, which is applied to a data processing system to which lock performance is particularly important. The data processing system may be the SMP system or a CC-NUMA system. In the embodiments of the present disclosure, the data processing system (i.e., the SMP system) shown in FIG. 6 is taken as an example for explanation, the L2-1 is a first cache unit, the L2-0 is a second cache unit, and a data processing apparatus interacting with the L2-1 and the L2-0 is the HN.

FIG. 2 is a first schematic diagram of a data processing flow according to an embodiment of the present disclosure. As shown in FIG. 2, the data processing method may be performed by the data processing apparatus in the data processing system, and includes operations S11 to S14.

At operation S11, a data exchange request message sent by the first cache unit is received, address information carried in the data exchange request message is acquired, and first target data corresponding to the address information in the memory is determined.

At this operation, the L2-1 (i.e., the first cache unit) sends the ATCCOMPARE message (i.e., the data exchange request message) carrying the address information to the HN (i.e., the data processing apparatus) to request the HN to modify the data corresponding to the address information in the memory. The HN queries the memory based on the address information carried in the ATCCOMPARE message to obtain the first target data corresponding to the address information.

At operation S12, a notification message is sent to the first cache unit.

At this operation, the HN locally allocates a data buffer space configured to store data sent by the L2-1 later. The notification message is the date buffer identification response (DBIDRESP) message. After allocating the data buffer space, the HN returns the DBIDRESP message to the L2-1, and the DBIDRESP message is configured to indicate that allocation of the data buffer space has been completed and the exchange data and the compare data are allowed to be sent to the HN.

At operation S13, an atomic compare data notification message sent by the first cache unit is received, and second target data and third data carried in the atomic compare data notification message are acquired, the third data is data to be exchanged with the first target data (i.e., the exchange data), and the second target data is data that has been requested to be read by the second cache unit.

The second target data is the compare data, and is data that has been previously requested to be read from the HN by the second cache unit and has been recorded as being in the shared state. The second cache unit and the first cache unit are cache units of the same level, and in the embodiments of the present disclosure, both the second cache unit L2-0 and the first cache unit L2-1 are cache units of the level-2 cache L2.

At this operation, the L2-1 sends the ATCCOMPARE_DAT (i.e., the atomic compare data notification message) including the second target data and the third data to the HN, and the second target data and the third data may be stored in the data buffer space allocated at the operation S12. The third data is the data to be exchanged with the first target data, is data to be modified by the L2-1, and is also the modified data (i.e., the exchange data) at a position corresponding to the address information in the memory. The second target data is data that has been previously requested to be read from the HN by another cache unit, that is, data that has been accessed by the L2-0, and a state of the data which is recorded in the L2-0 is the S state.

At operation S14, in a case where the second target data is not equal to the first target data, a data exchange response message carrying the third data is returned to the first cache unit.

At this operation, the HN compares the second target data with the first target data, and if the second target data and the first target data are not equal to each other, it is indicated that the data to be modified by the L2-1 is different from the data previously requested to be read by the L2-0, then the DATI message (i.e., the data exchange response message) is returned to the L2-1, the DATI message is a response message to the ATCCOMPARE message. It should be noted that in the case where the second target data is not equal to the first target data, the DATI message carries the third data to indicate that the HN does not write the third data to the memory.

According to the data processing method provided in the embodiments of the present disclosure, the corresponding first target data in the memory is determined based on the address information carried in the data exchange request message when the data exchange request message sent by the first cache unit is received, and the notification message is sent to the first cache unit for the first cache unit to send the second target data and the third data, the third data is the data to be exchanged with the first target data, and the second target data is the data that has been requested to be read by the second cache unit; and in the case where the second target data is not equal to the first target data, the data exchange response message carrying the third data is returned to the first cache unit. According to the embodiments of the present disclosure, the data comparison is performed first, then it is determined whether to initiate data snooping on another cache unit, and the data snooping on the other cache unit is not initiated and the other cache unit does not invalidate the corresponding data if the data comparison fails. Thus, usage of the data by other processing cores is not affected, so that bus bandwidth overhead and chip power consumption are reduced. In addition, when accessing the data, the other processing cores may directly read the data from the cache units thereof, with no need to re-access the memory for reading the data, so that the bus bandwidth overhead and the chip power consumption may be further reduced.

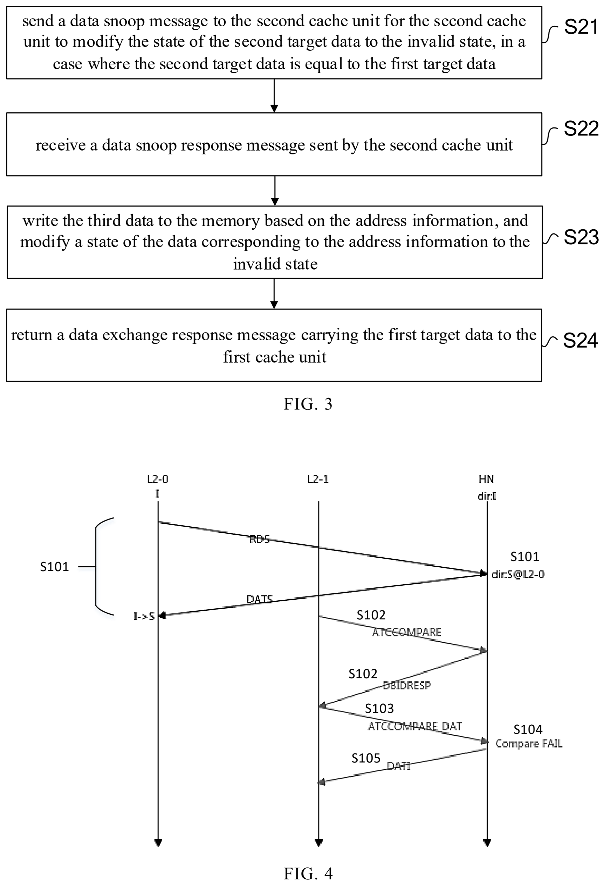

FIG. 3 is a second schematic diagram of a data processing flow according to an embodiment of the present disclosure, and the data processing method is executable by the data processing apparatus in the data processing system. As shown in FIG. 3, after receiving the second target data and the third data sent by the first cache unit (i.e., the operation S13), the data processing method may further include operations S21 to S24.

At operation S21, in a case where the second target data is equal to the first target data, a data snoop message is sent to the second cache unit for the second cache unit to modify a state of the second target data into the invalid state.

At this operation, the HN compares the second target data with the first target data, and if the second target data is equal to the first target data, it is indicated that the data to be modified by L2-1 is the same as the data previously requested to be read by the L2-0, then in this case, the HN initiates the data snooping on the L2-0 by sending the SNPtoI message (i.e., the data snoop message) to the L2-0, so as to enable the L2-0 to invalidate the second target data, that is, the L2-0 modifies the state of the second target data from the S state into the I state.

At operation S22, a data snoop response message sent by the second cache unit is received.

At this operation, after modifying the state of the second target data from the S state into the I state, the L2-0 returns the SNPRSPI message (i.e., the data snoop response message) which is a response message to the SNPtoI message to the HN, so as to inform the HN that the second target data is modified to be in the I state.

At operation S23, the third data is written to the memory based on the address information, and a state of the data corresponding to the address information (i.e., the third data) is modified into the invalid state.

At this operation, the HN writes the third data to the position in the memory which corresponds to the address information, that is, the HN updates the first target data with the third data, and then HN modifies the state of the corresponding data into the I state in the Table 2.

At operation S24, a data exchange response message carrying the first target data is returned to the first cache unit.

At this operation, the HN returns the DATI message (i.e., the data exchange response message) to the L2-1, the DATI message is the response message to the ATCCOMPARE message. It should be noted that in the case where the second target data is equal to the first target data, the DATI message carries the first target data to indicate that the HN has modified the first target data into the third data in the memory, that is, has invalidated the first target data. Thus, the L2-1 exchanges the first target data in the memory with the third data, thereby modifying the data in the memory that has been accessed by the L2-0.

In some embodiments, before receiving the data exchange request message sent by the first cache unit (i.e., the operation S11), the data processing method further includes operations S31 and S32.

At operation S31, a data read request message sent by the second cache unit is received, and the state of the second target data requested by the second cache unit is modified into the shared state.

At this operation, the L2-0 sends the RDS message (i.e., the data read request message) to the HN to request reading of the second target data, and the HN modifies the state of the second target data into the S state in the Table 2.

At operation S32, a shared state data read response message carrying the second target data is returned to the second cache unit for the second cache unit to store the second target data and modify the state of the second target data into the shared state.

At this operation, the HN sends the DATS message (i.e., the shared state data read response message) to the L2-0, the DATS message is a response message to the RDS message and carrying the second target data. The L2-0 stores the second target data, and modifies the state of the second target data from the I state into the S state.

It should be noted that after the operation S24 is completed, if the processing core Core0 corresponding to the L2-0 still needs to access the data corresponding to the address information, since the data corresponding to the address information in the memory has been modified into the third data, the L2-0 needs to send the RDS message to the HN again for reading the modified data (i.e., the third data), that is, the operations S31 and S32 need to be performed again.

In order to clearly describing the technical solution provided in the embodiments of the present disclosure, a processing flow of an ATCCOMPARE failure and a processing flow of an ATCCOMPARE success are described below with reference to FIG. 4 and FIG. 5, respectively.

FIG. 4 is a schematic diagram illustrating a processing flow of ATCCOMPARE (AtomicCompare) failure according to an embodiment of the present disclosure, and as shown in FIG. 4, the processing flow of ATCCOMPARE failure includes operations S101 to S104.

At operation S101, the L2-0 desiring to access the second target data sends the RDS message to the HN, and receives the DATS message for obtaining the second target data, and the L2-0 caches the second target data, and records the state of the second target data as the S state. After receiving the RDS message, the HN modifies the state of the corresponding data into the S state in the Table 2.

At operation S102, the L2-1 sends the ATCCOMPARE message carrying the address information to the HN, HN the allocates the data buffer space and then returns the DBIDRESP message to the L2-1 to notify the L2-1 that data is allowed to be sent.

At operation S103, after receiving the DBIDRESP message, the L2-1 sends the ATCCOMPARE_DAT to the HN, the ATCCOMPARE_DAT includes the second target data and the third data.

At operation S104, after receiving the ATCCOMPARE_DAT, the HN compares the second target data with the first target data corresponding to the address information, determines that the second target data and the first target data are not equal to each other, and confirms that the data comparison fails (Compare FAIL).

At operation S105, the HN directly returns the DATI message to the L2-1, the DATI message carries the third data.

As may be seen from the operations S101 to S105, according to the embodiments of the present disclosure, the data snooping on the L2-0 is not initiated before the data comparison is performed, so that the L2-0 does not modify the state of the second target data (still in the S state). Thus, the failure of the data comparison does not affect the data cached in the L2-0, and the processing core Core0 corresponding to L2-0 may continue to access the data in the L2-0 without re-initiating the RDS request to the HN as in the existing technical solutions.

According to the embodiments of the present disclosure, in a case where the Atomic Compare data comparison fails, no snoop message is sent to the other cache unit (i.e., the L2-0), so that the other cache unit does not invalidate the data. Thus, access to the data by the other processing core (i.e., the Core0) is not affected, and the other processing core (i.e., the Core0) does not need to access the memory again when accessing the data, so that the bus bandwidth overhead and the chip power consumption are reduced.

FIG. 5 is a schematic diagram illustrating a processing flow of ATCCOMPARE success according to an embodiment of the present disclosure, and as shown in FIG. 5, the processing flow of ATCCOMPARE success includes operations S201 to S207.

At operation S201, the L2-0 desiring to access second target data sends the RDS message to the HN, and receives the DATS message for obtaining the second target data, and the L2-0 caches the second target data, and records the state of the second target data as the S state. After receiving the RDS message, the HN modifies the state of the corresponding data into the S state in the Table 2.

At operation S202, the L2-1 sends the ATCCOMPARE message carrying the address information to the HN, the HN allocates the data buffer space and then returns the DBIDRESP message to the L2-1.

At operation S203, after receiving the DBIDRESP message, the L2-1 sends the ATCCOMPARE_DAT to the HN, the ATCCOMPARE_DAT includes the second target data and the third data.

At operation S204, after receiving the ATCCOMPARE_DAT, the HN compares the second target data with the first target data corresponding to the address information, determines that the second target data and the first target data are equal to each other, and confirms the data comparison succeeds (Compare success).

At operation S205, the HN sends the SNPtoI message to the L2-0 to snoop the L2-0.

At operation S206, the L2-0 receives the SNPtoI message, modifies the state of the data (i.e., the third data) corresponding to the address information from the S state into the I state to invalidate the data, and returns the SNPRSPI message to the HN to inform the HN that the data is invalidated and is allowed to be modified.

At operation S207, after receiving the SNPRSPI message, the HN writes the third data to the memory based on the address information, modifies the state of the data corresponding to the address information into the I state, and returns the DATI message to the L2-1, the DATI message carries the first target data. Thus, the Atomic operation succeeds.

It may be seen from the operations S201 to S207 that the data cached in the L2-0 is not affected until the data comparison succeeds, that is, the L2-0 does not need to invalidate the accessed data until the data comparison succeeds. Thus, if the processing core Core0 corresponding to the L2-0 needs to access the data again, since the data cached in the L2-0 is invalid, the L2-0 needs to initiate the RDS request to the HN again.

The embodiments of the present disclosure improve the atomic lock operation flow of AtomicCompare, and can be applied to systems to which atomic lock performance is particularly important, such as the SMP system, the CC-NUMA system and the like. The embodiments of the present disclosure can reduce the bandwidth overhead and the chip power consumption while improving AtomicCompare performance.

According to the embodiments of the present disclosure, in a case where the data comparison fails, snooping on another cache unit that stores data in the S-state is not needed, which may avoid invalidating the data stored in the other cache unit after the data comparison fails, and ensure that the corresponding processing core continues to read the data from the cache unit. The snooping on the other cache unit that stores the data in the S-state is initiated merely in a case where the data comparison succeeds, so that an effect of improving performance of the processing core is achieved. Meanwhile, extra bandwidth and power consumption caused by the snooping on the cache unit and re-access to the memory by the processing core are reduced.

An embodiment of the present disclosure further provides a data processing apparatus, including: one or more processors and a storage device; and the storage device has store thereon one or more programs which, when executed by the one or more processors, cause the one or more processors to implement the data processing method provided in any of the aforesaid embodiments.

An embodiment of the present disclosure further provides a data processing system, including at least one processing chip, which includes the above data processing apparatus.

In some embodiments, the processing system further includes a memory (Memory) and at least two levels of caches, and each level of cache includes at least one cache unit; and the data processing apparatus may be the host node (HN), or the data processing apparatus may be one of cache units that are at different levels from the first cache unit and the second cache unit. That is, the embodiments of the present disclosure are not limited to the cache units accessing memory data by interacting with the HN, and the cache units may access the memory data by interacting with the cache unit at another level.

It should be noted that the processing system may further include the network-on-chip (NOC), and the cache units at different levels may communicate with the host node via the NOC.

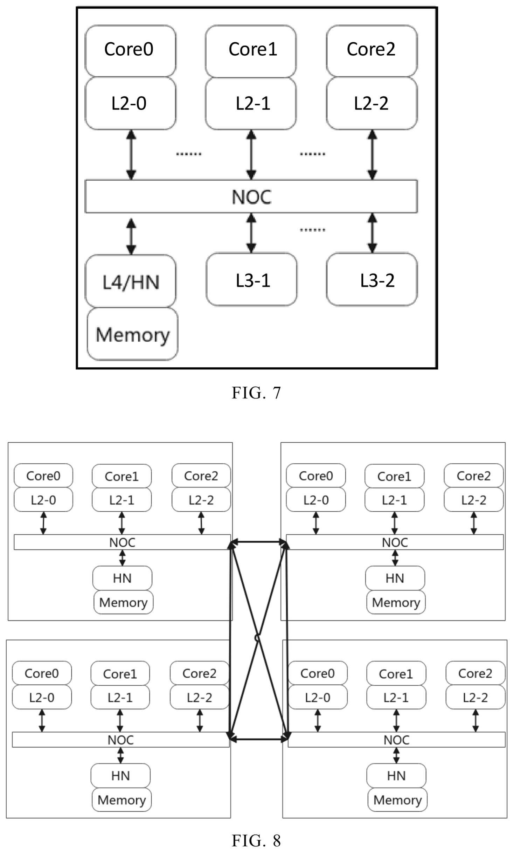

FIG. 7 is a second schematic structural diagram of a data processing system according to an embodiment of the present disclosure. As shown in FIG. 7, the processing system includes a level-2 cache (L2), a level-3 cache (L3), and a level-4 cache (L4), the L2 includes 3 cache units L2-0, L2-1, and L2-2, the L2-0 is connected to a processing core Core0, the L2-1 is connected to a processing core Core1, and the L2-2 is connected to a processing core Core2. The L3 includes 2 processing units L3-1 and L3-2, and the data processing apparatus may be the host node (HN) or a cache unit of the L4.

The data processing system may be the SMP system or the CC-NUMA system.

In some embodiments, at least two processing chips may be provided, each processing chip is at least connected to the other processing chip, and the processing chip to which the data processing apparatus belongs is the same as or different from the processing chip to which the first cache unit and the second cache unit belong.

In some embodiments, the processing chip includes, but is not limited to: a central processing unit (CPU), a graphics processing unit (GPU), an embedded neural Network processing unit (NPU), and a data processing unit (DPU).

In the data processing system including a plurality of processing chips, such as the CC-NUMA system, a cache unit may access memory data in the same processing chip, and may also access memory data in another processing chip, that is, the cache unit may realize access crossing CPUs.

In the CC-NUMA system, distributed memories are connected to form a single memory, no page copy or data copy exists between the memories, and no software messaging exists between the memories either. It is fast for a processing chip to access a local storage device, but it is slow for the processing chip to access a remote storag e device belonging to another processing chip because of an additional delay generated in an interconnection network. The CC-NUMA has merely one memory image, and memories of respective processing chips are physically connected by copper cables and some intelligent hardware. Cache coherent refers to that coherency of a plurality data copies can be maintained without software and data transmission between an operating system and an application system can also be realized without software. The CC-NUMA system is the same as the SMP system in that a single operating system and a plurality of processors achieve management entirely at the hardware level.

FIG. 7 is a second schematic structural diagram of a data processing system according to an embodiment of the present disclosure. The CC-NUMA system shown in FIG. 8 includes 4 processing chips, which are connected in pairs, and cache units of one processing chip may realize access to memory data crossing chips. It should be noted that a connection manner of respective processing chips in the CC-NUMA system is not limited in the embodiments of the present disclosure, for example, the processing chips may be connected in series.

An embodiment of the present disclosure further provides a computer-readable medium having stored thereon a computer program, and the data processing method provided in any of the aforesaid embodiments is implemented when the computer program is executed.

It should be understood by those of ordinary skill in the art that all or some of operations in methods as disclosed above, and functional modules/units in devices disclosed above may be implemented as software, firmware, hardware, or suitable combinations thereof. If they are implemented as hardware, division between the functional modules/units stated above is not necessarily corresponding to division of physical components. For example, one physical component may have a plurality of functions, or one function or operation may be performed through cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media implemented in any method or technology for storing information (such as computer-readable instructions, data structures, program modules and other data). The computer storage medium includes, but is not limited to, a random access memory (RAM), a read-only memory (ROM), an electrically erasable programmable read-only memory (EEPROM), a flash memory or other memory techniques, a compact disc read only memory (CD-ROM), a digital versatile disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses the exemplary embodiments by using specific terms, but the terms are merely used and should be merely interpreted as having general illustrative meanings, rather than for the purpose of limitation. In some examples, unless expressly stated, it is apparent to those of ordinary skill in the art that features, characteristics and/or elements described in connection with a particular embodiment can be used alone or in combination with features, characteristics and/or elements described in connection with other embodiments. Therefore, it should be understood by those of ordinary skill in the art that various changes in the forms and the details can be made without departing from the scope of the present disclosure of the appended claims.

## Claims

1. A data processing method applicable to a data processing apparatus in a data processing system, comprising:
receiving a data exchange request message sent by a first cache unit, acquiring address information carried in the data exchange request message, and determining first target data corresponding to the address information in a memory;
sending a notification message to the first cache unit;
receiving second target data and third data sent by the first cache unit, wherein the third data is data to be exchanged with the first target data, and the second target data is data that has been requested to read by a second cache unit; and
returning a data exchange response message carrying the third data to the first cache unit, in a case where the second target data is not equal to the first target data.

2. The method of claim 1, wherein after receiving the second target data and the third data sent by the first cache unit, the method further comprises:
sending a data snoop message to the second cache unit for the second cache unit to modify a state of the second target data into an invalid state, in a case where the second target data is equal to the first target data;
receiving a data snoop response message sent by the second cache unit;
writing the third data to the memory based on the address information, and modifying a state of the third data into the invalid state; and
returning a data exchange response message carrying the first target data to the first cache unit.

3. The method of claim 2, wherein the data snoop message is a snoop to invalid message, and the data snoop response message is a snoop response invalid message.

4. The method of claim 1, wherein before receiving the data exchange request message sent by the first cache unit, the method further comprises:
receiving a shared state data read request message sent by the second cache unit, and modifying a state of the second target data requested by the second cache unit into a shared state; and
returning a shared state data read response message carrying the second target data to the second cache unit for the second cache unit to store the second target data and modify the state of the second target data into the shared state.

5. The method of claim 1, wherein the data exchange request message is an atomic compare message, the notification message is a date buffer identification response message, and the data exchange response message is an invalid state data response message.

6. The method of any one of claims 1 to 5, wherein the data processing system comprises a processing chip, the memory, and at least two levels of caches, the processing chip comprises the data processing apparatus, each of the at least two levels of caches comprises at least one cache unit, and the data processing apparatus is a host node, or the data processing apparatus is one of cache units that are at different levels from the first cache unit and the second cache unit.

7. A data processing apparatus, comprising:
one or more processors; and
a storage device having one or more programs stored thereon,
wherein the one or more programs, when executed by the one or more processors, cause the one or more processors to implement the data processing method of any one of claims 1 to 6.

8. A data processing system, comprising at least one processing chip, which comprises the data processing apparatus of claim 7.

9. The data processing system of claim 8, further comprising the memory, at least two levels of caches, each of the at least two levels of caches comprises at least one cache unit, and the data processing apparatus is a host node, or the data processing apparatus is one of cache units that are at different levels from the first cache unit and the second cache unit.

10. The data processing system of claim 8, wherein the data processing system is a symmetric multiprocessing system or a cache-coherent non-uniform memory access system.

11. The data processing system of claim 10, wherein the processing chip comprises at least two processing chips, each of the at least two processing chips is at least connected to another processing chip, and a processing chip to which the data processing apparatus belongs is same as or different from a processing chip to which the first cache unit and the second cache unit belong.

12. The data processing system of any one of claims 8 to 11, wherein the at least one processing chip is one of a central processing unit, a graphics processing unit, an embedded neural network processing unit, and a data processing unit.

13. A computer-readable medium having a computer program stored thereon, wherein the data processing method of any one of claims 1 to 6 is implemented when the program is executed.
